# EUROPÄISCHE PATENTANMELDUNG

(11) **EP 4 439 422 A1**
(43) Veröffentlichungstag der Anmeldung: **02.10.2024**
(21) Anmeldenummer: 23165061.5
(22) Anmeldetag: 29.03.2023
(51) Int. Cl.: G06Q 10/0639, G06Q 50/06

(54) **VERFAHREN UND VORRICHTUNG ZUM COMPUTER-IMPLEMENTIERTEN BE-STIMMEN EINES WÄHREND DER LEBENSDAUER EINES TECHNISCHEN GERÄTS ERZEUGTEN EMISSIONSWERTS**

(71) Anmelder: Siemens Aktiengesellschaft, 80333 München (DE)
(72) Erfinder: Bretschneider, Jochen, 88696 Owingen (DE)
(74) Vertreter: Siemens Patent Attorneys

(57) **Zusammenfassung**

Die Erfindung betrifft ein Verfahren zum computer-implementierten Bestimmen eines während der Lebensdauer (LD) eines technischen Geräts (10) erzeugten Emissionswerts (EWi), bei dem für eine Zeitperiode (ZPi) innerhalb der Lebensdauer (LD) die folgenden Schritte durchgeführt werden:
a) Einlesen eines für die Zeitperiode (ZPi) bestimmten Energieverbrauchswerts (EVi) des technischen Geräts (10) ;
b) Einlesen eines für die Zeitperiode (ZPi) gültigen Emissionsfaktors (EFi), der aus einem Energieträgermix (EMi), mit dem das technische Gerät (10) in der Zeitperiode (ZPi) betrieben wird, bestimmt wurde;
c) Bestimmen des Emissionswerts (EWi) für die Zeitperiode (ZPi) aus dem Energieverbrauchswert und dem Emissionsfaktor (EFi);
d) Bereitstellen des Emissionswerts (EWi) für eine weitere Verarbeitung.

## Beschreibung

Die Erfindung betrifft ein Verfahren und eine Vorrichtung zum computer-implementierten Bestimmen eines während der Lebensdauer eines technischen Geräts erzeugten Emissionswerts.

In der Nutzungsphase eines technischen Geräts entstehen Emissionen, wie z.B. CO₂-Emissionen, durch die Verwendung bzw. den Verbrauch von Energieträgern, wie elektrischer Energie oder Primärenergieträger. Um die während der Nutzungsphase des technischen Geräts entstehenden Emissionen verringern zu können, kann die Energieeffizienz des technischen Geräts gesteigert werden. Ebenso kann durch Digitalisierungsmaßnahmen die Effizienz gesteigert werden.

Aktuell ist es für Hersteller von technischen Geräten üblich, über die angenommene Lebensdauer des technischen Geräts anfallende Emissionen gemäß dem Greenhouse Gas Protocol im Jahr des Verkaufs zu berichten. Für die Emissionsberechnung wird dabei der Emissionsfaktor für den globalen Strommix der IEA (International Energy Agency) genutzt. Um Verpflichtungen, die Emissionen um einen bestimmten Betrag gegenüber einem Bezugszeitpunkt zu reduzieren, erfüllen zu können, sind insbesondere die Emissionen aus der Nutzungsphase von sehr langlebigen technischen Geräten von Bedeutung, die wesentlich größer sind als die bei der Produktion anfallenden Emissionen.

Im Nachfolgenden wird auf CO₂ als Emission Bezug genommen, wobei die hierbei getroffenen Überlegungen auch auf andere Emissionen übertragen werden können. Der Einfachheit halber wird ebenso auf ein elektrische Energie verbrauchendes technisches Gerät, wie z.B. einen Elektromotor und die damit verbundenen Antriebskomponenten (z.B. Umrichter), Bezug genommen. Auch hier lassen sich die Überlegungen sinngemäß auf andere technische Geräte in gleicher Weise übertragen.

Im Wesentlichen bestehen drei Möglichkeiten, den CO₂-Fußabdruck während der Nutzungsphase eines technischen Gerätes zu verringern oder sogar zu neutralisieren. Die CO₂-Emissionen können vermieden, verringert oder ausgeglichen werden.

Eine Vermeidung von CO₂-Emissionen erfolgt heutzutage insbesondere durch den Einsatz von sog. "grünem" Strom. Dabei wird auf einen steigenden Anteil von grünem Strom im Strommix aller Energieerzeuger gesetzt.

Eine Verringerung von CO₂-Emissionen ist insbesondere durch die Steigerung der Energieeffizienz aufgrund von technischen Maßnahmen des technischen Geräts möglich. Alternativ oder zusätzlich kann durch den Einsatz von Steuerungs- und Automatisierungstechnik eine Verringerung von CO₂-Emissionen erzielt werden, indem das technische Gerät, z.B. in geplanten ungenutzten Zeiträumen, abgeschaltet wird oder im richtigen, (Effizienz-optimierten) Arbeitspunkt betrieben wird.

Die weitere Möglichkeit, den CO₂-Fußabdruck bei elektrisch betriebenen technischen Geräten zu neutralisieren, ist bislang nicht verbreitet, nämlich Zertifikate, die für bestimmte Mengen an CO₂ stehen und mit einem zugeordneten Klimaprojekt oder über Grünstromeigenschaft der Herstellung eingespart werden können, zu erwerben. Voraussetzung zur Neutralisierung des CO₂-Fußabdrucks bei der Nutzung solcher Zertifikate aus Klimaprojekten ist, dass das jeweilige Klimaprojekt ohne Zertifikaterlöse nicht durchgeführt werden könnte.

Klimaprojekte werden in unterschiedliche Projekttypen eingeteilt: Energieprojekte, die auf den Einsatz von erneuerbaren Energien und Energieeffizienz abzielen; Projekte zur Reduzierung oder zur Einbindung von CO₂ in den Bereichen Landwirtschaft, Wälder und Moore; Projekte zur Verringerung von Emissionen aus Entwaldung und Waldschädigung durch vermiedene Entwaldung, und Projekte in Bereichen wie Abfall und Deponiegas, Industrie oder Transport.

Es ist Aufgabe der Erfindung, ein Verfahren und eine Vorrichtung bereitzustellen, welche einen möglichst geringen Emissions-Fußabdruck über die Lebensdauer eines technischen Geräts hervorrufen.

Diese Aufgaben werden gelöst durch ein Verfahren gemäß den Merkmalen des Patentanspruches 1 und eine Vorrichtung gemäß den Merkmalen des Patentanspruches 11. Bevorzugte Ausgestaltungen sind in den abhängigen Ansprüchen angegeben.

Es wird ein Verfahren zum computer-implementierten Bestimmen eines während der Lebensdauer eines technischen Geräts erzeugten Emissionswerts vorgeschlagen.

Unter dem Begriff "während der Lebensdauer" ist insbesondere die gesamte Lebensdauer von der Inbetriebnahme des technischen Geräts bis zu dessen Außerbetriebnahme zu verstehen. Der Begriff "während der Lebensdauer" kann jedoch auch einen zeitlichen Abschnitt der Gesamtlebensdauer umfassen. Unter einem technischen Gerät im Sinne der vorliegenden Erfindung ist insbesondere ein elektrische Energie verbrauchendes technisches Gerät, wie z.B. ein Motor, Steuerungs- und Automatisierungskomponenten oder Kombinationen davon, zu verstehen. Ein technisches Gerät im Sinne der vorliegenden Erfindung kann auch ein einen Primärenergieträger, wie z.B. Gas oder Öl verbrauchendes Gerät, verstanden werden.

Bei dem Verfahren werden für eine Zeitperiode innerhalb der Lebensdauer die folgenden Schritte durchgeführt.
a) Einlesen eines für die Zeitperiode bestimmten Energieverbrauchswerts des technischen Geräts. Unter dem Begriff "Energieverbrauchswert" ist eine digitale Information zu verstehen, welche beispielsweise aus einem Datenspeicher (z.B. Datenbank) ausgelesen wird oder über eine Kommunikationsverbindung von einer Daten bereitstellenden Komponente (z.B. einem Energieverbrauchsmessgerät) bereitgestellt wird. Der Begriff "Einlesen eines Energieverbrauchswerts" bedeutet somit, dass ein Energieverbrauchswert durch eine Recheneinheit, die das Verfahren der vorliegenden Erfindung implementiert, empfangen wird.

In einem Schritt b) erfolgt das Einlesen eines für die Zeitperiode gültigen Emissionsfaktors, der aus einem Energieträgermix, mit dem das technische Gerät in der Zeitperiode betrieben wird, bestimmt wurde. Unter dem Begriff "Emissionsfaktor" ist eine digitale Information zu verstehen, die aus einem Datenspeicher (z.B. Datenbank) eingelesen oder über eine Kommunikationsschnittstelle von einer Datenquelle empfangen wird. Unter dem Begriff "Einlesen eines Emissionsfaktors" ist somit zu verstehen, dass der Emissionsfaktor durch die Recheneinheit, die das Verfahren der Erfindung implementiert, empfangen wird.

In einem Schritt c) erfolgt das Bestimmen des Emissionswerts für die Zeitperiode aus dem Energieverbrauchswert und dem Emissionsfaktor. Liegt der Energieverbrauchswert für die Zeitperiode als ein singulärer Verbrauchswert vor, so ergibt sich der Emissionswert aus dem Produkt des Energieverbrauchswerts und dem Emissionsfaktors. Liegen für mehrere Zeitintervalle, welche in Summe die Zeitperiode ergeben, jeweilige Energieverbrauchswerte und Emissionsfaktoren vor, so ergibt sich der Emissionswert für die Zeitperiode aus der Summe des jeweiligen Produkts von Energieverbrauchswert des Zeitintervalls und dem für alle Zeitintervalle gleichen Emissionsfaktor.

In einem Schritt d) erfolgt das Bereitstellen des Emissionswerts für eine weitere Verarbeitung.

Das Verfahren der Erfindung stellt ein einfaches Verfahren zur computer-implementierten Bestimmung eines während der Lebensdauer eines technischen Geräts erzeugten Emissionswerts bereit, wobei eine zeitliche Synchronität zwischen dem Energieverbrauch des technischen Geräts und des in der betreffenden Zeitperiode eingesetzten Strommixes berücksichtigt ist. Diese Korrelation wird dazu verwendet, eine exakte Emission des technischen Gerätes über die Zeit zu bestimmen, und erlaubt so auch eine exakte Kompensation der Emissionen. Dabei beruht das Verfahren auf dem Einsatz einer Digitalisierungslösung, mit dem der Energieverbrauchswert des technischen Geräts und der Energieträgermix, mit dem das technische Gerät in der betreffenden Zeitperiode betrieben wird, automatisiert ermittelt, eingelesen und daraus der resultierende Emissionswert berechnet wird.

Insbesondere ist die Zeitperiode die Zeitspanne, in der der Energieträgermix unverändert ist. Verändert sich der Energieträgermix, beispielsweise aufgrund einer veränderten vertraglichen Gestaltung des Energiebezugs, aus der ein veränderter Energiebezug mit anderem Energieträgermix des Betreibers des technischen Geräts resultiert, dann wird der Energieverbrauchswert zurückgesetzt und neu bestimmt. Dies wird ausgeführt, sobald eine auf die Zeitperiode folgende, weitere Zeitperiode beginnt. Gegenüber der vorangegangenen Zeitperiode weist die weitere Zeitperiode somit einen veränderten Energieträgermix auf.

Aufeinanderfolgende oder beliebige Zeitperioden innerhalb der Lebensdauer des technischen Geräts können dabei eine unterschiedliche Zeitdauer oder eine gleiche Zeitdauer (Länge) aufweisen. Die Zeitdauer (Länge) einer jeweiligen Zeitperiode wird dabei immer dadurch bestimmt, dass keine Veränderungen im Energieträgermix auftreten.

Mit anderen Worten korrespondiert der Beginn der weiteren Zeitperiode mit einer Änderung des Energieträgermixes.

In einer weiteren zweckmäßigen Ausgestaltung ist vorgesehen, dass der für eine Zeitperiode gültige Energieträgermix aus einer Datenbank oder einer Energiehandelsplattform ausgelesen wird. In Deutschland gibt es im Wesentlichen zwei Marktplätze zur Strombeschaffung: den außerbörslichen OTC-Handel (Over the Counter-Handel) und den Handel an der Strombörse EEX mit Sitz in Leipzig (European Energy Exchange). An beiden Handelsplätzen können kurzfristige und langfristige Verträge abgeschlossen werden. Eine Umrechnung in den Emissionsfaktor kann anhand der Information, welche Stromerzeugung welche CO₂-Emissionen aufweist, automatisiert durch eine Recheneinheit erfolgen. Bei der Bestimmung des Emissionsfaktors kann auch eine semantische Analyse eines Vertragsdokuments, das den Energieträgermix für den Betrieb des technischen Geräts regelt, vorgenommen werden.

In einer weiteren zweckmäßigen Ausgestaltung ist vorgesehen, dass für die Zeitperiode der Emissionswert in einer Datenbank gespeichert wird. Gemäß dieser Variante erfolgt für jede Zeitperiode unmittelbar eine Berechnung des Emissionswerts, sobald eine weitere Zeitperiode beginnt. Mit anderen Worten wird somit der Energieverbrauchswert bis zu diesem Zeitpunkt erfasst und die Erfassung optional mit dem Beginn einer weiteren Zeitperiode zurückgesetzt.

In einer alternativen Ausgestaltungsvariante werden für die Zeitperiode der Energieverbrauchswert und der Energieträgermix gespeichert. Auf diese Weise können, beispielsweise in regelmäßigen Abständen (z.B. jährlich) oder auch erst am Ende der gesamten Lebensdauer des technischen Geräts der Emissionswert ermittelt werden.

In einer weiteren Ausbildung ist vorgesehen, dass zusätzlich ein Zeitstempel der Zeitperiode und/oder eine Geräte-ID des technischen Geräts in der Datenbank gespeichert werden. Hierdurch ist es möglich, eine nachträglich bekanntwerdende Vertragsänderung zu berücksichtigen. Die Geräte-ID ermöglicht eine eineindeutige Zuordnung von technischem Gerät und ermitteltem Emissionswert.

Gemäß einer weiteren zweckmäßigen Ausgestaltung wird ein Gesamtemissionswert über die Anzahl an Zeitperioden innerhalb eines vorgegebenen Zeitraums, insbesondere der Lebensdauer, ermittelt. Ändert sich der Energieträgermix über die Lebensdauer nicht, so kann der Gesamtemissionswert aus dem Energieträgermix und dem Energieverbrauchswert einer einzigen Zeitperiode ermittelt werden. Ändert sich der Energieträgermix über die Lebensdauer hingegen zumindest einmal, so wird der Gesamtemissionswert aus den sich für eine jeweilige Zeitperiode ergebenden Emissionswerten aufsummiert.

Es ist weiterhin zweckmäßig, wenn für die Zeitperiode zumindest ein der Zeitperiode zugeordnetes Zertifikat gespeichert wird, das für den ermittelten Gesamtemissionswert einen Ausgleich der Emissionen belegt. Durch das Zertifikat wird ein Nachweis erbracht, dass für den über die Lebensdauer erzeugten Emissionswert Ausgleichsmaßnahmen in nachweisbarer Form geschaffen wurden. Der Nachweis erfolgt mit Hilfe des zumindest einen der Zeitperiode zugeordneten Zertifikats.

In einer weiteren zweckmäßigen Ausgestaltung wird eine Anzahl an Energieverbrauchswerten für eine vorgegebene Zeiteinheit in einer Datenbank gespeichert. Der Emissionswert wird für die Zeitperiode oder eine Anzahl an Zeitperioden mit dem für die betreffende Zeitperiode gültigen Energieträgermix zu einem späteren Zeitpunkt bestimmt. Diese Ausgestaltung erlaubt es, den Emissionswert für eine oder mehrere Zeitperioden auch zu einem späteren Zeitpunkt zu bestimmen, vorausgesetzt der Energieträgermix für die Zeitperiode oder Zeitperioden liegt vor.

Die Erfindung bezieht sich ferner auf eine Vorrichtung zum computer-implementierten Bestimmen eines während der Lebensdauer eines technischen Geräts erzeugten Emissionswerts, mit einer Recheneinheit, die dazu ausgebildet ist, für eine Zeitperiode innerhalb der Lebensdauer das Verfahren gemäß einer oder mehreren bevorzugten Ausgestaltungen des Verfahrens gemäß der Erfindung durchzuführen.

Schließlich bezieht sich die vorliegende Erfindung auf ein Computerprogrammprodukt mit Befehlen, die bei der Ausführung des Programms durch einen Computer diesen veranlassen die Schritte des Verfahrens nach einer oder mehreren Ausführungsformen durchzuführen, wenn dieses auf dem Computer ausgeführt wird.

Die Erfindung wird nachfolgend näher unter Bezugnahme auf ein Ausführungsbeispiel in der Zeichnung beschrieben. Es zeigen:
- Fig. 1: eine schematische Darstellung einer erfindungsgemäßen Vorrichtung zum computer-implementierten Bestimmen eines während der Lebensdauer eines technischen Geräts erzeugten Emissionswerts;
- Fig. 2: einen Zeitstrahl, der über die Lebensdauer des technischen Geräts unterschiedliche Zeitperioden mit unterschiedlichen Energieträgermixen illustriert; und
- Fig. 3: einen schematischen Ablaufplan zur Durchführung des erfindungsgemäßen Verfahrens.

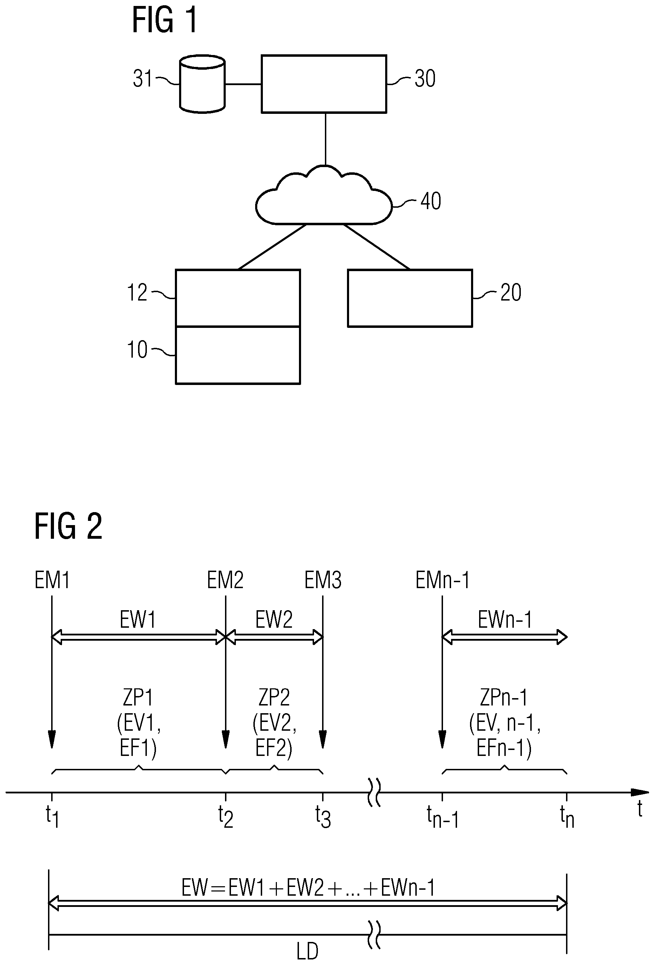

Fig. 1 zeigt eine schematische Darstellung einer erfindungsgemäßen Vorrichtung zum computer-implementierten Bestimmen eines während der Lebensdauer eines technischen Geräts 10 erzeugten Emissionswerts EW. Das technische Gerät 10 ist beispielsweise ein Elektromotor, ggf. in Kombination mit einer zugeordneten Steuerungs- und Automatisierungseinheit, welche während des Betriebs elektrische Energie verbraucht. Durch den elektrischen Energieverbrauch entstehen CO2-Emissionen, die abhängig davon sind, mit welchem Energiemix/Strommix das technische Gerät 10 betrieben wird.

In der nachfolgenden Beschreibung wird der Einfachheit halber auf einen elektrischen Verbraucher als technisches Gerät 10 Bezug genommen, wobei die gemachten Ausführungen auch für solche technischen Geräte gelten, die andere Energieträger als Strom nutzen. Beispielsweise kann es sich bei dem elektrischen Gerät 10 auch um eine Turbine, eine Pumpe, einen Lüfter, einen Kompressor und dergleichen handeln.

Um den für eine bestimmte Zeitperiode ZPi anfallenden Emissionen (welche durch den Emissionswert EWi repräsentiert sind) bestimmen zu können, sind die Kenntnis eines für die Zeitperiode ZPi bestimmten Energieverbrauchswerts EVi des technischen Geräts und eines Emissionsfaktors EFi notwendig, wobei der Emissionsfaktor EFi aus einem Energieträgermix, mit dem das technische Gerät in der Zeitperiode ZPi betrieben wird, bestimmt wird oder wurde. Das Suffix "i" bezeichnet allgemein die Nummer der 1...n-1 einer betreffenden Zeitperiode, eines Energieverbrauchswerts, eines Emissionsfaktors und Emissionswerts.

Der Energieverbrauchswert EWi des technischen Geräts 10 wird mit Hilfe einer Überwachungseinheit 12 bestimmt. Die Überwachungseinheit 12 kann eine Anzahl an geeigneten Sensoren, z.B. einen Spannungssensor und einen Stromsensor zur Bereitstellung jeweiliger Messgrößen, sowie eine Recheneinheit umfassen, die dazu ausgebildet ist, den Energieverbrauch Evi aus den Messgrößen zu bestimmen.

Die Überwachungseinheit 12 ist dazu ausgebildet, in vorgegebenen Zeitabständen, z.B. sekündlich, minütlich oder in anderen Zeitintervallen, aus den Messgrößen die jeweiligen Energieverbrauchswerte EVi zu ermitteln und über eine Kommunikationsverbindung 40, z.B. das Internet, an eine übergeordnete Recheneinheit 30 zusammen mit zugeordneten Zeitstempeln zu übermitteln. Alternativ können die Energieverbrauchswerte EVi für eine spätere Verarbeitung und Auswertung durch die übergeordnete Recheneinheit 30 in einem nicht dargestellten Datenspeicher, der mit der Überwachungseinheit 12 gekoppelt ist, gespeichert werden. Die übergeordnete Recheneinheit 30 kann die Energieverbrauchswerte EVi in Echtzeit weiterverarbeiten und auswerten oder einem Datenspeicher 31 für eine spätere Verarbeitung zwischenspeichern.

Zum Ermitteln des für die Zeitperiode ZPi gültigen Emissionsfaktors ist eine Emissionsfaktorbestimmungseinheit 20 vorgesehen, welche über die Kommunikationsverbindung 40 mit der übergeordneten Recheneinheit 30 verbunden ist. Die Emissionsfaktorbestimmungseinheit 20 ist dazu ausgebildet, für jeweilige Zeitintervalle aus einem Energieträgermix, der beispielsweise aus einer in Fig. 1 nicht dargestellten Datenbank oder von einer Energiehandelsplattform abgerufen werden kann, einen gültigen Emissionsfaktor EFi zu bestimmen und diesen mit einem Zeitstempel zu versehen.

Darüber hinaus kann die Emissionsfaktorbestimmungseinheit 20 neben dem regional gültigen Energieträgermix beispielsweise aus einem Vertragsdokument, das einen garantierten Energiemix für den Betrieb des technischen Geräts 10 regelt, entsprechende Informationen auswerten oder beziehen. Bezieht der Betreiber des technischen Geräts 10 seine elektrische Energie vertragsgemäß mit einem bestimmten Energiemix, so wird dieser Energieträgermix zur Bestimmung des gültigen Emissionsfaktors EFi herangezogen. Bezieht der Betreiber des technischen Geräts seine elektrische Energie hingegen allgemein zum regional gültigen Energieträgermix und erzeugt beispielsweise einen Teil seiner Energie selbst, so wird ein entsprechendes Verhältnis zwischen dem extern bezogenen Strom zum bekannten Energieträgermix und dem selbst erzeugten Strom zum ebenfalls bekannten Energieträgermix gebildet und der Bestimmung des gültigen Emissionsfaktors EFi zugrunde gelegt.

Die übergeordnete Recheneinheit 30 bestimmt dann den Emissionswert EWi für die Zeitperiode ZPi aus dem Energieverbrauchswert EVi und dem Emissionsfaktor EFi und stellt diesen für eine weitere Verarbeitung bereit, indem der für die Zeitperiode ZPi bestimmte Emissionswert z.B. in der Datenbank 31 abgelegt wird. Neben dem Emissionswert EWi werden die Zeitperiode charakterisierende Zeitpunkte gespeichert, z.B. ein Anfangszeitpunkt der Zeitperiode ZPi und ein Endpunkt der Zeitperiode ZPi.

Der dann für die Zeitperiode ZPi vorliegende Emissionswert EWi kann dann beispielsweise durch den Hersteller des technischen Geräts 10 über ein Zertifikat ausgeglichen werden. Durch ein solches Zertifikat, das stellvertretend für bestimmte Mengen an Emissionen steht, erfolgt der Nachweis, welche Menge an Emissionen mit der Realisierung eines Klimaprojekts eingespart werden können. Das Zertifikat, das dem Betreiber des technischen Geräts 10 zur Verfügung gestellt wird oder werden kann, kann beispielsweise dem Emissionswert EWi zugeordnet in der Datenbank 31 abgespeichert werden.

Das hier prinzipiell beschriebene Verfahren bringt die Aspekte des Energieverbrauchs des technischen Geräts über die Zeitperiode ZPi und den in dieser Zeitperiode ZPi eingesetzten Strommix/Energieträgermix in eine zeitliche Synchronität, was es erlaubt, einen Ausgleich der Emissionen mit Hilfe von Zertifikaten vorzunehmen.

Der in dieser Beschreibung verwendete Begriff einer "Zeitperiode" definiert hierbei die Zeitspanne, in der der bestimmte Energieträgermix unverändert ist. Ändert sich somit der Energieträgermix über die Lebensdauer LD des technischen Geräts 10 nicht, so entspricht die Lebensdauer LD genau einer Zeitperiode. Ändert sich demgegenüber der Energieträgermix mindestens einmal über die Lebensdauer LD des technischen Geräts 10, so sind mehrere Zeitperioden ZPi mit unterschiedlichen Energieträgermixen zu berücksichtigen. Dies ist schematisch in Fig. 2 dargestellt.

Fig. 2 zeigt einen Zeitstrahl, wobei eine von t = t₁ bis t = tₙ andauernde Zeitspanne die Lebensdauer LD des technischen Geräts 10 angibt. Die Lebensdauer LD kann abhängig vom technischen Gerät einen beliebigen Zeitraum umfassen und z.B. mehrere Monate oder Jahre betragen.

Zum Zeitpunkt t = t₁ beginnt eine erste Zeitperiode ZP1, in der das technische Gerät 10 mit einem ersten Energieträgermix EM1 betrieben wird. Die erste Zeitperiode ZP1 dauert bis zum Zeitpunkt t = t₂, zu dem sich der Energieträgermix von EM1 nach EM2 ändert. Mit Hilfe der oben beschriebenen Überwachungseinheit 12 wird nunmehr für die Zeitperiode ZP1 der Energieverbrauchswert EV1 bestimmt. Mit Hilfe der Emissionsfaktorbestimmungseinheit 20 wird ein für die Zeitperiode ZP1 gültiger Emissionsfaktor EF1 bestimmt. Hieraus ergibt sich dann durch Multiplikation bzw. Integration über die Zeitperiode ein Emissionswert EW1. Der Emissionswert EW1 wird für die Zeitperiode ZP1 durch die übergeordnete Recheneinheit 30 ermittelt und in der Datenbank 31 abgespeichert.

Für die zweite Zeitperiode ZP2, die eine Zeitspanne zwischen t = t₂ und t = t₃ einnimmt, werden in entsprechender Weise ein Energieverbrauchswert EV2 und ein Emissionsfaktor EF2 ermittelt. Die übergeordnete Recheneinheit 30 bestimmt hieraus dann den Emissionswert EW2, der in der Datenbank 31 abgespeichert wird.

Der Beginn einer neuen Zeitperiode wird durch die Emissionsfaktorbestimmungseinheit 20 getriggert, nämlich dadurch, dass diese eine Veränderung im Energieträgermix detektiert. Infolgedessen wird der sich hieraus ergebende neue gültige Emissionsfaktor zur Anwendung gebracht, wobei gleichzeitig mit dem Beginn einer neuen Zeitperiode durch die Überwachungseinheit ein Zurücksetzen des Energieverbrauchswerts erfolgt, um eine korrekte Bestimmung des Emissionswerts vornehmen zu können. Dieses Vorgehen wird wiederholt bis das Lebensdauerende technischen Geräts zum Zeitpunkt t = tₙ erreicht ist.

Aus den für die jeweiligen Zeitperioden ZP1 bis ZPn-1 ermittelten Emissionswerten EW1, ..., EWn-1 kann dann ein Gesamtemissionswert EW für die Lebensdauer LD des technischen Geräts 10 bestimmt werden. Dies ergibt sich aus der Summe der genannten Emissionswerte EW1 bis EWn-1.

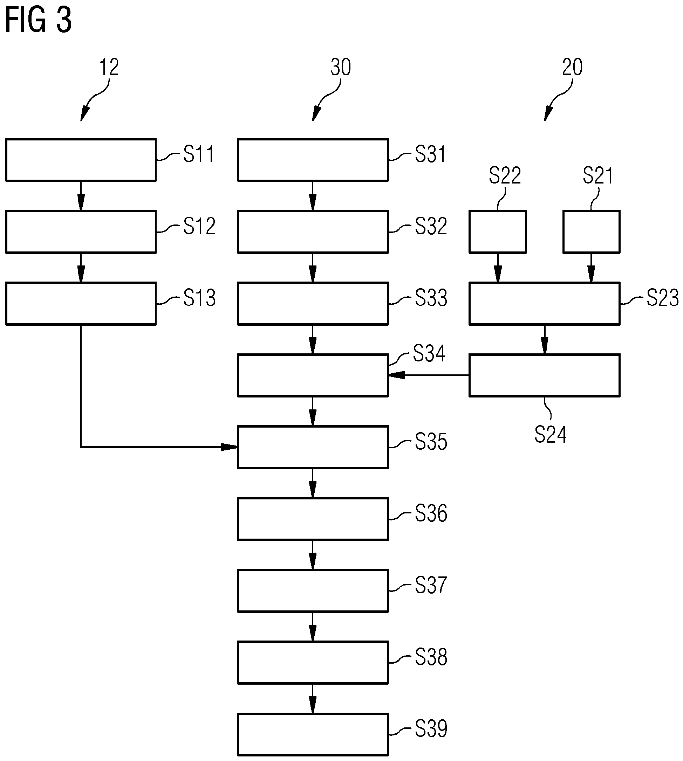

Fig. 3 zeigt einen Ablaufplan des erfindungsgemäßen Verfahrens, wobei der Ablauf der beteiligten Komponenten der Überwachungseinheit 12, der Emissionsfaktorbestimmungseinheit 20 und der übergeordneten Recheneinheit 30 illustriert sind.

Als vorbereitende Maßnahme wird in einem Schritt S11 das technische Gerät 10 mit der Überwachungseinheit 12 gekoppelt, so dass die Überwachungseinheit 12 in die Lage versetzt wird, den Energieverbrauchswert EVi für eine jeweilige Zeitperiode ZPi zu bestimmen. Wie oben beschrieben, überträgt die Überwachungseinheit die Energieverbrauchswerte EVi kontinuierlich oder legt die Energieverbrauchswerte EVi in einem möglichst geringen Takt in einem Speicher ab und wartet auf eine Abfrage durch die übergeordnete Recheneinheit 30. Die Überwachungseinheit 12 muss dabei die Zeitperiode ZPi nicht kennen. Von der übergeordneten Recheneinheit 30 kommt die Abfrage: Wie war der Energieverbrauchswert zum Zeitpunkt Tx und wie war er zum Zeitpunkt Tx+1. In Schritt S12 erfolgt ein initiales Zurücksetzen des Energieverbrauchswerts EVi sowie ggf. entsprechender anderer sensorisch ermittelter Messwerte, aus denen der Energieverbrauchswert EVi berechnet wird. Schritt S12 kann auch nach einem Auslesen von gespeicherten Energieverbrauchswerten EVi durchgeführt werden. In Schritt S13 erfolgt die Übertragung des/der Energieverbrauchswerte EVi, wobei die Übertragung kontinuierlich oder durch Auslesen aus einem Speicher erfolgen kann.

In entsprechender Weise erfolgt in Schritt S21 durch die Emissionsfaktorbestimmungseinheit 20 das Einlesen einer Information über den Energieträgermix von einer Energiehandelsplattform oder aus einer Datenbank. In Schritt S22 wird (parallel) ein gültiger oder neuer Energievertrag, mit dem das technische Gerät durch den Betreiber betrieben wird oder werden soll, registriert. Die Angaben über den Energieträgermix sind in Echtzeit verfügbar. Ein geänderter Energieträgervertrag kann auch erst z.B. ein Jahr später bekannt gemacht werden. Daher ist es zweckmäßig, dass der übergeordneten Einheit 30 die tatsächlichen Energieverbrauchswerte EVi in guter zeitlicher Auflösung vorliegen, um später geeignete Korrekturrechnungen durchführen zu können. In Schritt S23 wird aus den vorliegenden Informationen der Emissionsfaktor EFi bestimmt, wobei dieser aus dem Energieträgermix, mit dem das technische Gerät 10 in der Zeitperiode ZPi betrieben wird, ermittelt wird. Diese Information wird dann in Schritt S24 der übergeordneten Recheneinheit zugeführt, wobei gleichzeitig jede Änderung eines neuen Energievertrags, mit dem sich der Energieträgermix ändert, zu einer Neubestimmung des Emissionsfaktors EFi in den Schritten S22, S23 führt.

Änderungen im Energieträgermix können in einem bestimmten Zeitintervall, z.B. im 15 Minutentakt, aktualisiert werden. Real ändert sich damit der Emissionsfaktor auch in jedem Zeitintervall, z.B. alle 15 Minuten. Verträge haben in der Regel eine längere Laufzeit. Aufgabe der Emissionsfaktorbestimmungseinheit 20 ist es in einem solchen Szenario, an die übergeordnete Einheit 30 ebenfalls einen Zeitstempel zu übertragen, der besagt, ab wann ein Emissionsfaktor Gültigkeit hat.

Als vorbereitende Schritte registriert die übergeordnete Recheneinheit 30 in Schritt S31 die Überwachungseinheit 12. In Schritt S32 erfolgt die Registrierung der Emissionsfaktorbestimmungseinheit 20. In Schritt S33 wird eine eindeutige Verbindung zwischen der Emissionsfaktorbestimmungseinheit 20 und dem technischen Gerät 10 vorgenommen. Dies kann z.B. mithilfe einer Geräte-ID realisiert werden. Dies stellt sicher, dass für jede Zeitperiode der korrekte Emissionswert berechnet werden kann.

In Schritt S34 liest die übergeordnete Recheneinheit 30 den für die gültige/letzte Zeitperiode gültigen Energieträgermix EMi ein, wenn sie von der Emissionsfaktorbestimmungseinheit 20 beim Auftreten einer Veränderung getriggert wird. In Schritt S35 liest die übergeordnete Recheneinheit 30 von der Überwachungseinheit 12 einen Energieverbrauchswert EVi des technischen Geräts ein. Der Energieverbrauchswert EVi wird in Schritt S13 durch die Überwachungseinheit, vorzugsweise kontinuierlich, an die übergeordnete Recheneinheit übertragen. Hierbei können beispielsweise vorgegebene Zeitintervalle für die Übertragung genutzt werden. Wie oben beschrieben, kann auch ein Auslesen aus einem Speicher erfolgen, z.B. beim Anliegen des o.g. Triggers.

Alternativ können durch die Überwachungseinheit 12 eine Vielzahl von Energieverbrauchswerten über die Zeit in einem Speicher hinterlegt werden und auf Anforderung der übergeordneten Recheneinheit 30 als Gesamtheit an diese übertragen werden. Beispielsweise wird die übergeordnete Recheneinheit 30 hierdurch in die Lage versetzt, eine Vielzahl von Energieverbrauchswerten EVi dann abzurufen, sollte eine neue Zeitperiode mit verändertem Energieverbrauchsmix beginnen.

In Schritt S36 wird eine Historie der Energieverbrauchswerte EVi zusammen mit dem Emissionsfaktor EFi in der Datenbank 31 gespeichert. Alternativ kann auch das Ergebnis des aus diesen Werten ermittelten Emissionswertes EWi in der Datenbank 31 gespeichert werden. Diese folgt in Schritt S37. In Schritt S38, der optional ist, kann nach einer vorgegebenen Zeitperiode, z.B. einer Abrechnungsperiode, eine Kompensation von Emissionen, die von dem technischen Gerät 10 während der vergangenen Abrechnungsperiode verbraucht wurden, getriggert werden. In Schritt S39 wird ein Zertifikat, das die erfolgreiche Kompensation von Emissionen beweist, durch die übergeordnete Recheneinheit 30 empfangen und z.B. in der Datenbank 31 gespeichert. Ebenso werden die Zeitperioden ZPi in der Datenbank 31 gespeichert.

Das vorgeschlagene Vorgehen weist eine Reihe von Vorteilen auf:
Das vorgeschlagene Verfahren ermöglicht eine automatische Zuordnung und Speicherung von Verbrauchsdaten und CO2-Emissionen sowie eine CO2-Kompensation für eine von einem Nutzer betriebene Komponente. Durch die automatische Erfassung von Änderungen im Energieträgermix, z.B. aufgrund von Veränderungen in geänderten Versorgungsverträgen, und der hochfrequenten Erfassung von Verbrauchswerten kann eine fortlaufende Berechnung der CO2-Emissionen erfolgen. Dies ist sogar in Echtzeit möglich.

Eine automatisierte Erfassung und ein Bericht über CO2-Kompensationen aus Klimaschutzprojekten kann dem Nutzer des technischen Geräts 10 einen kontinuierlichen Überblick über die CO2-Emission gewähren. Ferner kann ein automatisierter Austausch von CO2-Zertifikaten zwischen dem Hersteller des technischen Geräts und einem Anwender des technischen Geräts während dessen Betriebsphase erfolgen.

Darüber hinaus besteht die Möglichkeit einer automatisierten Speicherung von akkumulierten CO2-Emissionen und der akkumulierten CO2-Kompensation in einem Speicher des technischen Geräts 10 selbst. Wird das technische Gerät zu Servicezwecken z.B. ausgebaut, so lässt sich aus zentral gespeicherten Daten oder aus den im technischen Gerät abgelegten Daten feststellen, ob noch CO2-Emissionen zu kompensieren sind.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum computer-implementierten Bestimmen eines während der Lebensdauer (LD) eines technischen Geräts (10) erzeugten Emissionswerts (EWi), bei dem für eine Zeitperiode (ZPi) innerhalb der Lebensdauer (LD) die folgenden Schritte durchgeführt werden:
a) Einlesen eines für die Zeitperiode (ZPi) bestimmten Energieverbrauchswerts (EVi) des technischen Geräts (10) ;
b) Einlesen eines für die Zeitperiode (ZPi) gültigen Emissionsfaktors (EFi), der aus einem Energieträgermix (EMi), mit dem das technische Gerät (10) in der Zeitperiode (ZPi) betrieben wird, bestimmt wurde;
c) Bestimmen des Emissionswerts (EWi) für die Zeitperiode (ZPi) aus dem Energieverbrauchswert (EVi) und dem Emissionsfaktor (EFi);
d) Bereitstellen des Emissionswerts (EWi) für eine weitere Verarbeitung.

2. Verfahren nach Anspruch 1, **dadurch gekennzeichnet, dass** die Zeitperiode (ZPi) die Zeitspanne ist, in der der Energieträgermix (EMi) unverändert ist.

3. Verfahren nach Anspruch 1 oder 2, **dadurch gekennzeichnet, dass** der Energieverbrauchswert (EVi) zurückgesetzt und neu bestimmt wird, wenn eine auf die Zeitperiode (ZPi) folgende, weitere Zeitperiode (ZPi+1) beginnt.

4. Verfahren nach Anspruch 3, **dadurch gekennzeichnet, dass** der Beginn der weiteren Zeitperiode (ZPi+1) mit einer Änderung des Energieträgermixes (EMi) korrespondiert.

5. Verfahren nach einem der vorhergehenden Ansprüche, **dadurch gekennzeichnet, dass** der für eine Zeitperiode (ZPi) gültige Energieträgermix (EMi) aus einer Datenbank oder einer Energiehandelsplattform ausgelesen wird.

6. Verfahren nach einem der Ansprüche 1 bis 5, **dadurch gekennzeichnet, dass** für die Zeitperiode (ZPi) der Emissionswert (EWi) in einer Datenbank (31) gespeichert wird.

7. Verfahren nach einem der Ansprüche 1 bis 5, **dadurch gekennzeichnet, dass** für die Zeitperiode (ZPi) der Energieverbrauchswert (EVi) und der Energieträgermix (EMi) gespeichert werden.

8. Verfahren nach Anspruch 6 oder 7, **dadurch gekennzeichnet, dass** zusätzlich ein Zeitstempel der Zeitperiode (ZPi) und/oder eine Geräte-ID des technischen Geräts (10) in der Datenbank (31) gespeichert werden.

9. Verfahren nach einem der vorhergehenden Ansprüche, **dadurch gekennzeichnet, dass** ein Gesamtemissionswert (EW) über die Anzahl an Zeitperioden (ZPi) innerhalb eines vorgegebenen Zeitraums, insbesondere der Lebensdauer (LD), ermittelt wird.

10. Verfahren nach Anspruch 8, **dadurch gekennzeichnet, dass** für die Zeitperiode (ZPi) zumindest ein der Zeitperiode (ZPi) zugeordnetes Zertifikat gespeichert wird, das für den ermittelten Gesamtemissionswert (EW) einen Ausgleich der Emissionen belegt.

11. Verfahren nach einem der vorhergehenden Ansprüche, **dadurch gekennzeichnet, dass** eine Anzahl an Energieverbrauchswerten für eine vorgegebene Zeiteinheit in einer Datenbank gespeichert wird und der Emissionswert (EWi) für die Zeitperiode (ZPi) oder eine Anzahl an Zeitperioden (ZPi) mit dem für die betreffende Zeitperiode (ZPi) gültigen Energieträgermix (EMi) zu einem späteren Zeitpunkt bestimmt wird.

12. Vorrichtung zum computer-implementierten Bestimmen eines während der Lebensdauer eines technischen Geräts (10) erzeugten Emissionswerts (EWi), mit einer Recheneinheit, die dazu ausgebildet ist, für eine Zeitperiode (ZPi) innerhalb der Lebensdauer (LD) die folgenden Schritte durchzuführen:
a) Einlesen eines für die Zeitperiode (ZPi) bestimmten Energieverbrauchswerts des technischen Geräts (10);
b) Einlesen eines für die Zeitperiode (ZPi) gültigen Emissionsfaktors (EFi), der aus einem Energieträgermix (EMi), mit dem das technische Gerät (10) in der Zeitperiode (ZPi) betrieben wird, bestimmt wurde;
c) Bestimmen des Emissionswerts (EWi) für die Zeitperiode (ZPi) aus dem Energieverbrauchswert und dem Emissionsfaktor (EFi);
d) Bereitstellen des Emissionswerts (EWi) für eine weitere Verarbeitung.

13. Vorrichtung nach Anspruch 12, **dadurch gekennzeichnet, dass** die Recheneinheit dazu ausgebildet ist, Schritte des Verfahren gemäß einem der Ansprüche 2 bis 11 durchzuführen.

14. Computerprogrammprodukt, umfassend Befehle, die bei der Ausführung des Programms durch einen Computer diesen veranlassen, die Schritte des Verfahrens nach Anspruch nach einem der Ansprüche 1 bis 11 auszuführen.
